# EUROPEAN PATENT APPLICATION

(11) **EP 4 763 718 A2**
(43) Date of publication of application: **24.06.2026**
(21) Application number: 25214256.7
(22) Date of filing: 07.11.2025
(51) Int. Cl.: B65B 9/20, B65B 29/02, B65B 61/08, B65B 61/00, B65G 47/52, B65G 51/03, B65B 9/207, B65B 35/24, B65B 35/28, B65B 59/00

(54) **MACHINE FOR THE PRODUCTION OF POUCHES CONTAINING, ON THE INSIDE, A QUANTITY OF LOOSE MATERIAL, IN PARTICULAR SNUS**

(30) Priority: 18.12.2024 IT 202400028869
(71) Applicant: Sasib S.p.A., 40013 Castel Maggiore (BO) (IT)
(72) Inventor: GHIOTTI, Roberto, 40013 CASTEL MAGGIORE (BO) (IT)
(74) Representative: Studio Torta S.p.A.

(57) **Abstract**

A machine (6) for the production of pouches (1) is disclosed, wherein each pouch (1) encloses, on the inside, a respective quantity (2) of a loose material and is closed by two transverse seals (5) opposite one another. The machine (6) comprises: a forming station (13), which is located along a manufacturing path (Q) of the pouches (1) and is configured to form a continuous succession of pouches (1) connected to one another in transverse sealing zones (Z); a cutting device (17), which is located downstream of the forming station (13) along the manufacturing path (Q) and is configured to transversely cut the continuous succession of pouches (1) in the area of the zones (Z) so as to separate the single pouches (1); a conveying device (18), which is configured to convey the continuous succession of pouches (1) coming from the forming station (13) towards the cutting device (17); and an accompanying element (32), which is located along the manufacturing path (Q) and comprises a main body (33) and at least one seat (34) obtained in the main body (33) and defining a plane (35) for accompanying the continuous succession of pouches (1) exiting the conveying device (18) towards the cutting device (17).

## Description

### CROSS-REFERENCE TO RELATED APPLICATIONS

This patent application claims priority from Italian patent application no. 102024000028869 filed on December 18, 2024, the entire disclosure of which is incorporated herein by reference.

### TECHNICAL FIELD

The invention relates to a machine for the production of pouches containing a quantity of a loose product (i.e. a non-compact product), in particular snus. The invention advantageously applies to the production of snus pouches (namely, permeable pouches intended for oral use, each containing a predetermined quantity of a loose product, i.e. a non-compact, more or less moist product, e.g. a nicotine-based product), to which explicit reference will be made in the description below without thereby lacking generality.

### PRIOR ART

As it is known, a snus pouch has a substantially rectangular shape, is obtained starting from a wrapping sheet, which is bent onto itself so as to assume a closed shape around a quantity of (more or less moist) powder material, and is stabilized by means of a longitudinal seal and by means of a pair of transverse seals opposite to one another.

A packer machine for the production of snus pouches typically comprises a feeding device for feeding a wrapping material band along a manufacturing path, a wrapping station located along the manufacturing path, in which the wrapping material band is wrapped so as to form a tubular wrap having a longitudinal development around a wrapping duct, and a loose material supplying device, which ends at the entrance of the wrapping duct and is configured to supply, in succession, the quantities of loose product into the tubular wrap (around which the wrapping material is folded so as to form the tubular wrap) by means of compressed air.

The packer machine further comprises a longitudinal sealing unit for longitudinally sealing the tubular wrap in the area of an overlapping zone of the wrapping material band and a transverse sealing unit for transversely sealing the tubular wrap so as to form an alternated succession of sealing zones and zones containing a quantity of loose product, i.e. a continuous succession of pouches.

Finally, the packer machine comprises a conveying device configured to convey the continuous succession of pouches coming from the transverse sealing unit towards a cutting unit designed to transversely cut the continuous succession of pouches in the area of the transverse sealing zones so as to separate the single pouches.

In the segment between the conveying device and the cutting device, the continuous succession of pouches is not guided. This can result in an inaccurate cut, which, in the worst cases, is not performed in the area of the sealing zones, but in the area of the zones containing a quantity of loose product.

This problem is particularly felt the more the width of the sealing zones is reduced; in this case, in fact, a greater cutting precision is necessary in order to guarantee pouches of adequate quality.

Document EP3426561 discloses a machine for the production of bags for known infusion products with a forming station located along a bag manufacturing path, a cutting unit located downstream of the forming station along the manufacturing path and configured to obtain the single bags; and a conveying device located along the manufacturing path between the forming station and the cutting unit.

### DESCRIPTION OF THE INVENTION

The object of the invention is to provide a machine for the production of pouches containing a quantity of a loose product, in particular snus, which is not affected by the drawbacks of the prior art and, at the same time, is easy and economic to be manufactured.

According to the invention, there is provided a machine for the production of pouches, wherein each pouch encloses, on the inside, a respective quantity of a loose material and is closed by two transverse seals opposite one another. The machine comprises at least one packer unit configured to produce the pouches, which comprises, in turn: a forming station, which is located along a manufacturing path for the pouches and is configured to form a continuous succession of pouches connected to one another in the area of transverse sealing zones; a cutting device, which is located downstream of the forming station along the manufacturing path and is configured to transversely cut the continuous succession of pouches in the area of the transverse sealing zones so as to separate the single pouches; a conveying device, which is located along the manufacturing path between the forming station and the cutting device and is configured to convey the continuous succession of pouches coming from the forming station towards the cutting device; and an accompanying element, which is located along the manufacturing path between the conveying device and the cutting device and comprises a main body and at least one seat (preferably two seats), which is obtained in the main body and is preferably open at the top; each seat is configured to define a plane for accompanying the continuous succession of pouches exiting the conveying device towards the cutting device.

According to a preferred embodiment, the accompanying element comprises a pneumatic transport device configured to create an air cushion interposed between the continuous succession of pouches and the accompanying plane, which facilitates the movement of the continuous succession of pouches towards the cutting device.

Advantageously, the movement of the continuous succession of pouches towards the cutting device is controlled and guided.

According to a variant, the air cushion interposed between the continuous succession of pouches and the accompanying plane can be made of air sucked in. According to a variant, the air cushion interposed between the continuous succession of pouches and the accompanying plane can be made of blown air. According to a further variant, the air cushion interposed between the continuous succession of pouches and the accompanying plane can be made of a combination of air sucked in and blown air.

According to a preferred embodiment, the pneumatic transport device comprises a number of openings obtained in the accompanying plane configured to direct the air flow towards the continuous succession of pouches; wherein the openings are in fluid communication with a channel obtained in the main body, which is provided with at least one opening for the connection to an air supply circuit.

According to a preferred embodiment, the openings comprise a number of slits, which extend in the longitudinal direction and are arranged substantially parallel to one another. Advantageously, this conformation of the openings facilitates the controlled movement of the continuous succession of pouches towards the cutting device.

According to a variant, the openings are provided with a base surface arranged parallel to the accompanying plane. Alternatively, the openings are provided with a base surface arranged so as to form, with the accompanying plane, an angle ranging from 5° to 45°. As a further alternative, the openings are provided with a base surface arranged so as to form, with the accompanying plane, an angle ranging from 135° to 175°. According to a further variant, some openings can have a base wall with a certain inclination and other openings can have a base wall with a different inclination.

According to a preferred embodiment, the slits extend from a point located at a distance other than zero from the end of the accompanying plane facing the conveying device to the end of the accompanying plane facing the cutting device.

According to a preferred embodiment, the openings comprise a number of holes that are substantially aligned in at least one line along the longitudinal dimension of the accompanying plane.

According to a preferred embodiment, the accompanying plane has dimensions that are substantially the same as those of a pouch.

According to a preferred embodiment, said at least one seat is provided with two lateral panels configured to laterally guide/direct the continuous succession of pouches towards the cutting device; the lateral panels are transverse relative to the accompanying plane.

According to a preferred embodiment, the conveying device comprises a pair of belts looped around respective pulleys and on top of one another.

According to a preferred embodiment, said at least one packer unit operates on a multiple line to manufacture a plurality of continuous successions of pouches at a time and the machine comprises one single accompanying element having one single main body and a plurality of seats obtained in the main body and arranged side by side.

According to a preferred embodiment, said at least one packer unit operates on a multiple line to manufacture a plurality of continuous successions of pouches at a time and the machine comprises an accompanying element for each line, each having, in turn, a respective main body), in which one single seat is obtained.

### BRIEF DESCRIPTION OF THE DRAWINGS

The invention will now be described with reference to the accompanying drawings showing a non-limiting embodiment thereof, wherein:
- figure 1 is a front view, with parts removed for greater clarity, of a packer machine for the production of pouches according to the invention;
- figure 2 is a front view, with parts removed for greater clarity, of a portion of a variant of the packer machine of figure 1;
- figure 3 is a perspective view of the portion of the packer machine of figure 2;
- figures 4a and 4b are a perspective view and a sectional side view, respectively, of a first embodiment of an accompanying device of the portion of the packer machine of figure 2;
- figures 5a and 5b are a perspective view and a sectional side view, respectively, of a second embodiment of an accompanying device of the portion of the packer machine of figure 2;
- figures 6a, 6b and 6c are a perspective view and sectional views, respectively, of a third embodiment of an accompanying device of the portion of the packer machine of figure 2;
- figures 7a, 7b and 7c are a perspective view and sectional views, respectively, of a fourth embodiment of an accompanying device of the portion of the packer machine of figure 2;
- figure 8 is a perspective view of a pouch containing a quantity of loose material obtained by means of the packer machine of figure 1 or of figure 2.

### PREFERRED EMBODIMENTS OF THE INVENTION

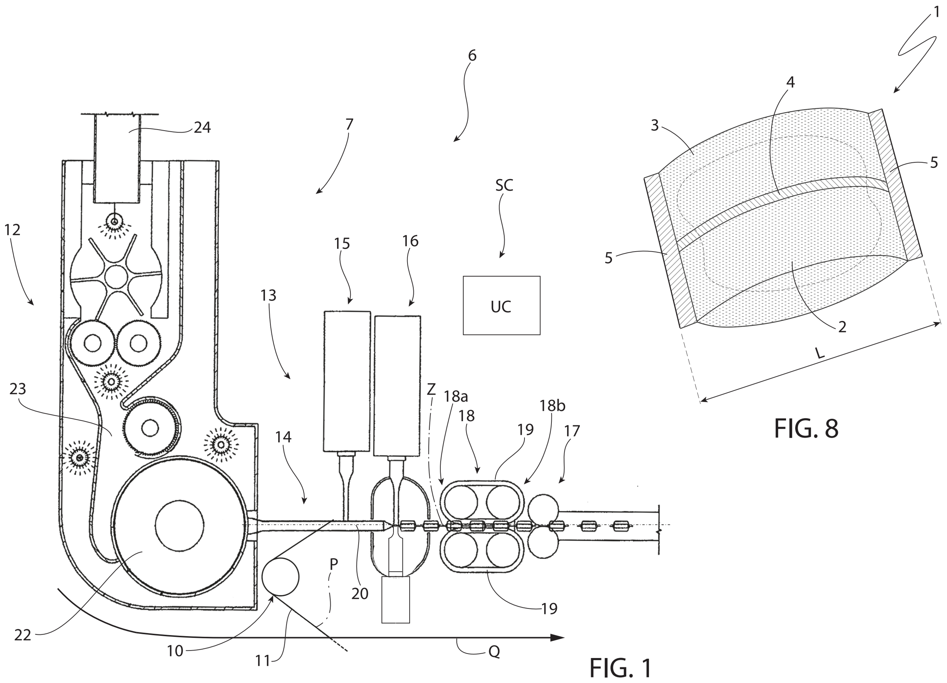

In figure 8, number 1 indicates, as a whole, a pouch containing, on the inside, a quantity 2 of a loose material (i.e. a non-compact product, for example, in the form of a powder, granules or paste).

Preferably, the pouch 1 containing the quantity 2 of loose material is a product intended for oral use. Alternatively, the pouch 1 containing the quantity 2 of loose material could be a product for infusion or other uses; in this case, the quantity 2 could comprise chopped or powdered tea leaves or herbs.

According to the preferred embodiment, the pouch 1 contains a quantity 2 of snus.

In particular, the quantity 2 of loose material can be a more or less moist material; in case the material of the quantity 2 has a low degree of moisture, then the material will be in a powdery/granular and extremely non-compact form; in case the material of the quantity 2 has a higher degree of moisture, it will be in a more pasty and more compact form.

The quantity 2 of loose material preferably comprises nicotine (for example, it can comprise tobacco and/or extracted nicotine) and/or other flavours.

The pouch 1 has a substantially quadrilateral, preferably square or rectangular shape.

With particular reference to figure 8, the pouch 1 has a rectangular shape and has a longitudinal development along a development axis.

The pouch 1 consists of a wrapping sheet 3 (for example, made of paper material or non-woven fabric or fleece), which is bent onto itself so as to assume a closed shape around the quantity 2 and is stabilized by means of sealing. In particular, the pouch 1 is closed by a longitudinal seal 4 (i.e. parallel to the development axis of the pouch 1) and by two transverse seals 5 (i.e. transverse, in particular orthogonal to the development axis of the pouch 1), which are opposite and preferably parallel to one another. In other words, the wrapping sheet 3 is bent around the portion 2 and stabilized by sealing.

With reference to figure 8, "L" indicates the length of a pouch 1 measured parallel to the longitudinal development axis of the pouch 1.

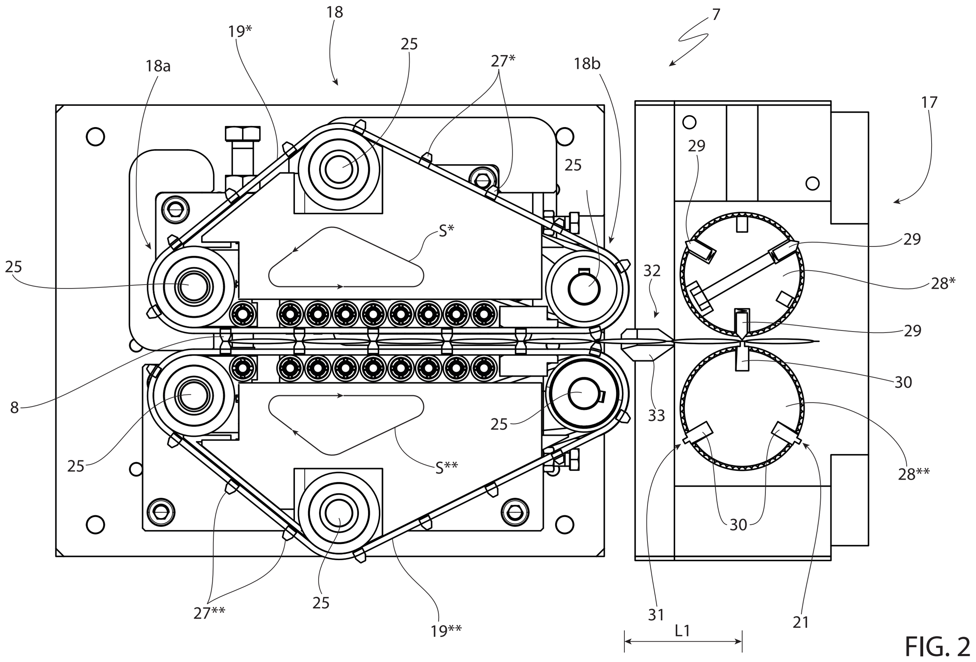

In figures 1 and 2, reference number 6 indicates, as a whole, a packer machine producing pouches 1.

The packer machine 6 comprises a number of packer units 7 (for example, one packer unit 7 or two packer units 7 arranged in succession), each configured to produce the pouches 1. Advantageously, each packer unit 7 operates on a multiple line to produce a plurality of successions of pouches 1 at a time (i.e. simultaneously). In particular, each packer unit 7 operates on a double line to produce two successions of pouches 1 at a time; in other words, each packer unit 7 is configured to produce two rows of pouches 1 at the same time. Alternatively, each packer unit 7 operates on one single line (namely, it produces one single pouch 1 at a time or, more precisely, one single row of pouches 1 at a time).

The packer unit 7 comprises a feeding device 10 for feeding a wrapping material band 11 along a feeding path P up to a forming station 13, as described more in detail below.

Within the packer unit 7, the loose material, on the other hand, is fed along a manufacturing path Q, which entails a supplying device 12 configured to supply the quantities 2 in the area of the wrapping material band 11.

The packer unit 7 further comprises the forming station 13 located downstream of the supplying device 12 along the manufacturing path Q so as to enclose the quantities 2 within the wrapping material band 11.

According to the embodiment shown in figure 1 or 2, the feeding device 10 feeds the wrapping material band 11 along a feeding path P, which develops under the manufacturing path Q. In other words, the wrapping material band 11 is fed from below towards the forming station 13. Alternatively, according to an embodiment which is not shown herein, the feeding path P can be developed above the manufacturing path Q; in other words, the wrapping material band 11 could be fed from above towards the forming station 13.

In particular, the forming station 13 comprises:
- a wrapping device 14, in the area of which the wrapping material band 11 is rolled up so as to form a tubular wrap 8 having a longitudinal development, wherein a first edge of the wrapping material band 11 partially overlaps a second edge of the wrapping material band 11, thus defining an overlapping area;
- a longitudinal sealing unit 15 located downstream or in the area of the wrapping device 14 along the manufacturing path Q and configured to longitudinally seal the tubular wrap 8 in the overlapping area in order to create the longitudinal seal 4;
- a transverse sealing unit 16 located downstream of the longitudinal sealing unit 15 along the manufacturing path Q and configured to make the transverse seals 5 of the tubular wrap so as to form a continuous succession of pouches 1 connected to one another in the area of transverse sealing zones Z; and
- a cutting device 17 located downstream of the transverse sealing unit 16 along the manufacturing path Q and configured to transversely cut the tubular wrap 8 in the area of the transverse sealing zones Z so as to separate the single pouches 1.

It should be pointed out that each transverse sealing zone Z of the succession has a width (measured along the longitudinal development of the succession of pouches 1) equal to the sum of the width of two transverse seals 5 of the pouches 1. In fact, following the transverse cut in the transverse sealing zone Z, the transverse seal 5 of two consecutive pouches 1 is defined.

Therefore, the wrapping device 14, the longitudinal sealing unit 15, the transverse sealing unit 16 and the cutting device 17 are then arranged in succession along the manufacturing path Q.

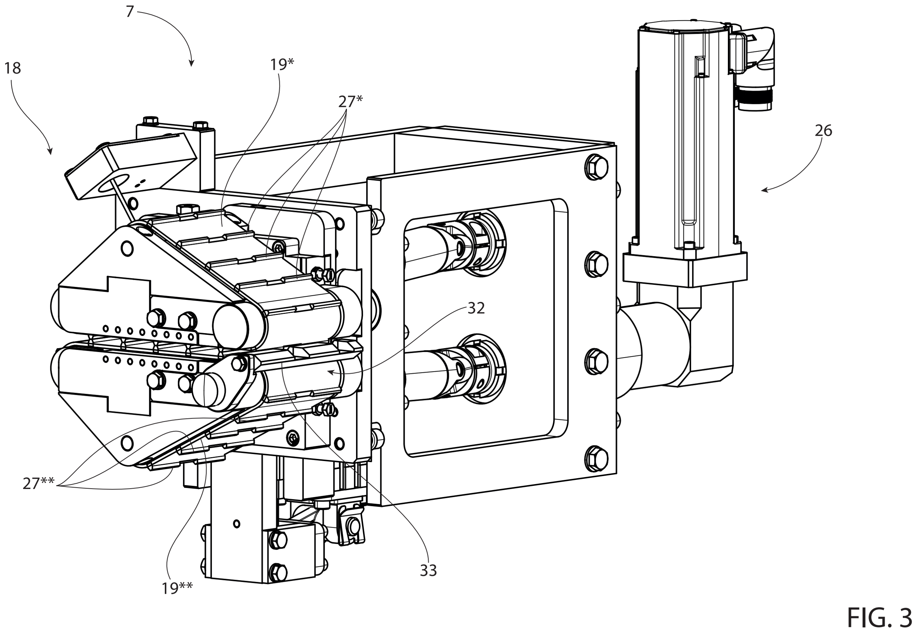

According to the embodiment shown in figures 2 and 3, a conveying device 18 is interposed between the transverse sealing unit 16 and the cutting device 17. The conveying device 18 develops along the manufacturing path Q and comprises a first end 18a and a second end 18b, which are located upstream and downstream, respectively, of the manufacturing path Q.

Preferably, the second end 18b of the conveying device 18 is distant from the cutting device 17 by a length L1 that is smaller than twice the length L of each pouch 1. Advantageously, this mutual positioning of the conveying device 18 and of the cutting device 17 makes it possible to guide and control the movement of the continuous succession of pouches 1 until the transverse cut.

Even more preferably, the second end 18b of the conveying device 18 is distant from the cutting device 17 by a length L1 substantially equal to the length L of each pouch 1.

It should be pointed out that length L1 means the length of the distance between the second end 18b of the conveying device 18 and the point where the cut is made by the cutting device 17 (i.e. the point where a cutting device 29 acts upon the continuous succession of pouches 1).

The wrapping device 14 comprises a tubular spindle element 20, which extends along the manufacturing path Q (namely, parallel to the manufacturing path Q). The outer surface of the tubular spindle element 20 defines a wrapping surface, around which the wrapping material band 11 is bent so as to form the tubular wrap 8. The tubular spindle element 20 internally defines a loose material supplying duct.

The loose material supplying device 12 is configured to supply, in succession, the quantities 2 into the tubular wrap 8 along the manufacturing path Q. Hence, the supplying device 12 is located upstream of the forming station 13 along the manufacturing path Q.

The supplying device 12 comprises a supplying drum 22, which preferably rotates with an intermittent law of motion (namely, having a cyclic alternation of motion phases and standstill phases) around a horizontal rotation axis. The supplying drum 22 is coupled to a suction source in the area of a loading station, where the supplying drum 22 receives the loose material, and is coupled to a source of compressed air in the area of a supplying station, where the supplying drum 22 (through compressed air jets) directs the single quantities 2 into the supplying duct defined by the tubular spindle element 20.

In use, as the supplying drum 22 rotates, a continuous rod of loose material is progressively formed on the shell of the supplying drum 22 (as a result of the suction source); the continuous bead of loose material is conveyed to the supplying station where, thanks to the compressed air source, the quantities 2 are separated from the continuous rod and transferred along the supplying duct defined by the tubular spindle element 20 until they enter the wrapping material band 11 bent into a tube around the tubular spindle element 20.

The supplying device 12 further comprises a hopper 23, which is located above the supplying drum 22 and conveys by gravity the loose material towards the loading station, where the loose material is picked up by the supplying drum 22. The hopper 23 is open at the top and communicates with a loose material input channel 24.

The supplying device 12 is configured to supply the portions 2 into the supplying duct defined by the tubular spindle element 20 in such a way that each quantity 2 is separated from the preceding quantity 2 and from the following quantity 2 by a corresponding empty space, which is necessary to make the transverse seal 5 without the transverse seal 5 trapping the loose material or, in any case, locally compressing the loose material. In other words, the supplying duct defined by the tubular spindle element 20 is filled with quantities 2 interspersed with empty spaces designed to allow the transverse seal 5 to be made.

Finally, the packer machine 6 comprises one single control system SC, which controls the operation of all packer units 7. More in detail, the control system SC comprises a control unit UC configured to control the packer units 7.

The control system SC can comprise a first sensor (not shown) for each packer unit 7 connected to the control unit UC. The first sensor is configured to detect the weight of each pouch 1 and to transmit a signal indicative of the weight of each pouch 1 to the control unit UC; the control unit UC is therefore configured to operate (control) the respective supplying drum 22 based on the signals received from the first sensor. Advantageously, the first sensor is of the microwave type.

The control system SC can comprise a second optical sensor (not shown) for each packer unit 7 connected to the control unit UC. The second sensor is configured to detect the quality of the pouches 1 (i.e. to detect the presence of dust or impurities in the seals) and to transmit a signal indicative of the quality of each pouch 1 to the control unit UC; the control unit UC is configured to cause the rejection of the non-compliant pouches 1 based on the signals received from the second sensor. Advantageously, the second optical sensor is located downstream of the transverse sealing unit 16 along the manufacturing path Q. In particular, the second optical sensor is interposed between the transverse sealing unit 16 and the conveying device 18. It should be pointed out that the second sensor can be in addition to or alternative to the first sensor.

The control system SC can further comprise a third optical sensor (not shown) for each packer unit 7 connected to the control unit UC. The third sensor is configured to detect the cutting quality of the single pouches 1 and/or the transverse dimension of the transverse seals 5 and to transmit an indicative signal to the control unit UC; the control unit UC is configured to control the cutting device 17 based on the signals received from the third sensor and to cause the rejection of the non-compliant pouches 1. Advantageously, the third optical sensor is located downstream of the cutting unit 17 along the manufacturing path Q. It should be pointed out that the third sensor can be in addition to or alternative to the first sensor and/or the second sensor.

According to figures 2 and 3, the conveying device 18 is configured to convey the continuous succession of pouches 1 coming from the transverse sealing unit 16 towards the cutting device 17. The conveying device 18 comprises a pair of belts 19 looped around respective pulleys 25 and on top of one another. More in detail, each belt 19 is looped around three pulleys 25.

Each belt 19 develops along a respective conveying path S*, S** the two conveying paths S*, S** have respective straight segments arranged parallel to one another and facing one another so as to define a passage channel for the continuous succession of pouches 1.

The conveying device 18 comprises an actuator device 26, preferably a brushless motor, configured to control the motion of both belts 19.

The belts 19 are provided with teeth 27 or claws, which project towards the other belt 19 from a flat outer surface. In other words, the teeth 27* of a (first) belt 19* face the teeth 27** of a (second) belt 19** in the area of the straight segment of the respective conveying paths S*, S**. Each tooth 27* of the (first) belt 19* is configured to face a respective tooth 27** of the (second) belt 19** in the area of the straight segment of the respective conveying paths S*, S**. Each tooth 27 further has a height such that the distance between two teeth 27 facing one another in the area of the straight segment is substantially equal to the thickness of a longitudinal seal 5.

Advantageously, the teeth 27 are evenly distributed along the respective belt 19. The distance between two successive teeth 27 is substantially equal to the distance between (the centre of) two successive transverse sealing zones Z in the continuous succession of pouches 1 coming from the transverse sealing unit 16. In other words, the distance between two successive teeth 27 is substantially equal to the length L of the pouch 1. The distance between two successive teeth 27 is suitably defined by the distance between two successive transverse seals 5.

The two belts 19 are operated in a synchronous manner. In particular, the two belts 19 are operated so that, in the area of the straight segments of the respective conveying paths S*, S**, each tooth 27* faces a respective tooth 27**. The two teeth 27*, 27** facing one another are configured to clamp a transverse sealing zone Z of the continuous succession of pouches 1 and to drag the continuous succession of pouches 1 along the manufacturing path Q.

The supplying device 18 is located in the area of the cutting unit 17 along the manufacturing path Q. In particular, the supplying device 18 is located immediately upstream of the cutting station 17 along the manufacturing path Q. The conveying device 18 is located close to the cutting unit 17 so that the continuous succession of pouches 1 exiting the conveying device 18 is fed into the cutting unit 17. Preferably, the continuous succession of pouches 1 exiting the conveying device 18 is directly fed into the cutting unit 17 without the interposition of further conveying or dragging devices.

The cutting device 17 is located immediately downstream of the conveying device 18 along the manufacturing path Q and is configured to cut the continuous succession of pouches 1 in the area of the transverse sealing zones Z so as to separate the single pouches 1.

Preferably, the cutting device 17 comprises at least one cutting device 29 and at least one countering device 30, which cooperate with one another to cut the continuous succession of pouches 1 in the area of the transverse sealing zones Z. Said at least one countering element 30 is provided with a flat upper surface 31 supporting the transverse sealing zones Z, which has a transverse dimension that is smaller than the width of the transverse sealing zones Z.

Advantageously, this sizing of the flat upper support surface 31 for the transverse sealing zones Z allows a more precise cut to be obtained.

With particular reference to Figure 1, the cutting device 17 comprises two opposite rollers 28, which cooperate with one another to cut the continuous succession of pouches 1 in the area of the transverse seals 5. Advantageously, the cutting device 17 operates continuously without the need to stop to cut the succession of pouches 1.

The two rollers 28 are mounted in a rotary manner so that they can rotate around two corresponding horizontal rotation axes parallel to one another and are preferably caused to rotate by a same actuator device. The two rollers 28 are caused to rotate in a synchronous manner with the same rotation speed.

The two rollers 28 are located on opposite sides of the continuous succession of pouches 1. In other words, the two rollers 28 are facing one another so as to define a passage channel for the continuous succession of pouches 1. More in detail, a (first) lower roller 28* is located below the continuous succession of pouches 1 and a (second) upper roller 28** is located above the continuous succession of pouches 1. In use, the continuous succession of pouches 1 is interposed between the upper roller 28** and the lower roller 28*.

Advantageously, the upper roller 28** supports a number of cutting devices 29 and the lower roller 28* supports a number of countering devices 30. Alternatively, the lower roller 28* supports a number of cutting devices 29 and the upper roller 28** supports a number of countering devices 30. The cutting devices 29 are evenly distributed on the periphery of the respective upper/lower roller 28; similarly, the countering devices 30 are evenly distributed on the periphery of the respective upper/lower roller 28.

Preferably, the upper roller 28** supports a plurality of (for example, three) cutting devices 29 and the lower roller 28* supports a plurality of (for example, three) countering devices 30. The number of cutting devices 29 is the same as the number of countering devices 30.

Each cutting device 29 is configured to cooperate with a respective countering device 30 to cut the continuous succession of pouches 1 in the area of a respective transverse seal 5.

Each cutting device 29 comprises a cutting blade, which is configured to come into contact with the continuous succession of pouches 1 in order to cut transversely it.

The countering element 30 has, in plan view, a rectangular shape. In particular, the countering element 30 is provided with a flat upper surface 31 supporting the transverse seals 5. The transverse dimension (width) of the upper surface is suitably defined based on the width of the transverse sealing zones Z (and, therefore, based on the width of the transverse seals 5). More in detail, the transverse dimension (width) of the upper surface 31 is smaller than the width of the transverse sealing zone Z; in this way, the portion of the pouch 1 containing the quantity 2 of loose material does not rest on the countering device 30 during the cutting phase. For example, in case a transverse seal 5 of the pouch 1 of 2.5 mm is to be obtained, it will be necessary to create a sealing zone Z with a width of 5 mm (which will then be cut at the centre to define the transverse seals 5 of 2.5 mm); in this case, the transverse dimension (width) of the upper surface 31 is smaller than 5 mm and is preferably equal to 4 mm.

Advantageously, the transverse dimension (width) of the upper surface 31 ranges from 1 mm to 4.5 mm.

The cutting device 17 operates continuously, i.e. the continuous succession of pouches 1 never stops to make the cut in the area of the transverse seals 5, but rather the two rollers 28 rotate continuously around their respective axes and the cutting devices 29 and the countering devices 30, with which the two rollers 28 are equipped, cooperate so as to follow the continuous succession of pouches 1 to make the cut in the area of the transverse seals 5.

According to a preferred embodiment, the packer unit 7 comprises an accompanying element 32 located along the manufacturing path Q. More in detail, the accompanying element 32 is configured to feed the continuous succession of pouches 1 exiting the conveying device 18 towards the cutting device 17. Therefore, accompanying element 32 is interposed between the conveying device 18 and the cutting device 17.

According to a possible embodiment, the accompanying element 32 has a dimension in a direction parallel to the manufacturing path Q such as to substantially occupy all the space available between the conveying device 18 and the cutting device 17.

Advantageously, the accompanying element 32 is located substantially halfway between the conveying device 18 and the cutting device 17.

Preferably, the accompanying element 32 is located near and immediately upstream of (i.e. close to) the cutting device 17 so as to facilitate the access of the continuous succession of pouches 1 to the cutting device 17 and improve accuracy in the positioning of the continuous succession of pouches 1 before the cut.

Alternatively, the accompanying element 32 is located near and immediately downstream of (i.e. close to) the conveying device 18.

The accompanying element 32 comprises a main body 33 and a number of seats 34, which are obtained in the main body 33 and are open at the top. Each seat 34 is configured to accommodate a respective continuous succession of pouches 1 among those simultaneously manufactured by the packer unit 7 (it could be one single continuous succession of pouches, it could be two or more continuous successions of pouches parallel to one another).

More in detail, the accompanying element 32 comprises a number of seats 34 that is the same as the number of pouches 1 manufactured in parallel (in particular, the same as the number of continuous successions of pouches 1 manufactured by each packer unit 7), for example two. The two seats 34 are identical to one another. Each seat 34 is substantially U-shaped (alternatively, each seat 34 could simply be defined by a plane). In detail, the number of seats 34 of the accompanying element 32 can be one, two or more.

According to an embodiment, in case the packer unit 7 operates on a multiple line to manufacture a plurality of continuous successions of pouches 1 at a time, there is one single accompanying element 32 having, in turn, one single main body 33 and a plurality of seats 34 obtained in the main body 33 and arranged side by side. Alternatively, in case the packer unit 7 operates on a multiple line to manufacture a plurality of continuous successions of pouches 1 at a time, there is an accompanying element 32 for each line (i.e. for each continuous succession of pouches 1) having, in turn, a respective main body 33, in which one single seat 34 is obtained. The plurality of accompanying elements 32 are arranged next to one another.

Each seat is provided with a substantially flat base surface 35, which defines an accompanying plane 35 for the continuous succession of pouches 1. The accompanying plane 35 has, in plan view, a rectangular shape. The dimension of the accompanying plane 35 is suitably defined based on the dimension of the pouch 1. More in detail, the longitudinal dimension (length) of the accompanying plane 35 is substantially equal to the length L of the pouch 1 and the transverse dimension (width) of the accompanying plane 35 is substantially equal to the width of the pouch 1. In other words, the seat 34 is made with dimensions such as to accommodate one pouch 1 at a time of the continuous succession of pouches 1.

Each seat 34 is further provided with two lateral panels 36 configured to laterally guide/direct the continuous succession of pouches 1 towards the cutting device 17. The lateral panels 36 are defined by two containment surfaces facing one another. Said containment surfaces are transverse to the accompanying plane 35. According to a possible embodiment, the containment surfaces are orthogonal to the accompanying plane 35.

Preferably, the accompanying element 32 comprises a pneumatic transport device 37 configured to accompany (facilitate) the movement of the continuous succession of pouches 1. More in detail, the pneumatic transport device 37 is configured to create an air cushion interposed between the continuous succession of pouches 1 and the accompanying plane 35; the air cushion is designed to keep the continuous succession of pouches 1 slightly suspended with respect to the accompanying plane 35 but, at the same time, to push it towards the cutting device 17.

The pneumatic transport device 37 comprises a number of (first) openings 38 obtained in the accompanying plane 35 and configured to direct the air flow towards the end of the continuous succession of pouches 1 facing the accompanying plane 35. The openings 38 are in fluid communication with a channel 39 obtained in the main body 33 and configured for the connection to an air supply circuit by means of a (second) opening 40.

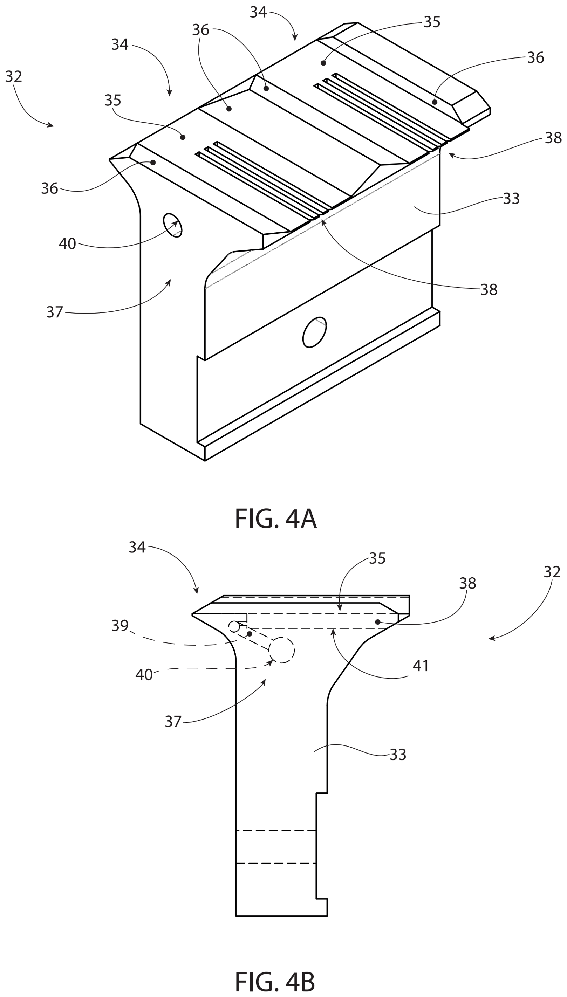

According to a first embodiment shown in figures 4A-4B, the openings 38 are defined by a number of slits 38, which extend in the longitudinal direction and are arranged substantially parallel to one another. In particular, there are a plurality of (for example, three) slits 38, which extend in the longitudinal direction and are arranged substantially parallel to one another. Advantageously, the slots 38 do not extend along the entire longitudinal dimension (length) of the accompanying plane 35. Preferably, the slits 38 extend from a point located at a distance (other than zero) from the end of the accompanying plane 35 facing the conveying device 18 to the end of the accompanying plane 35 facing the cutting device 17. The slits 38 are provided with a base surface 41 arranged parallel to the accompanying plane 35.

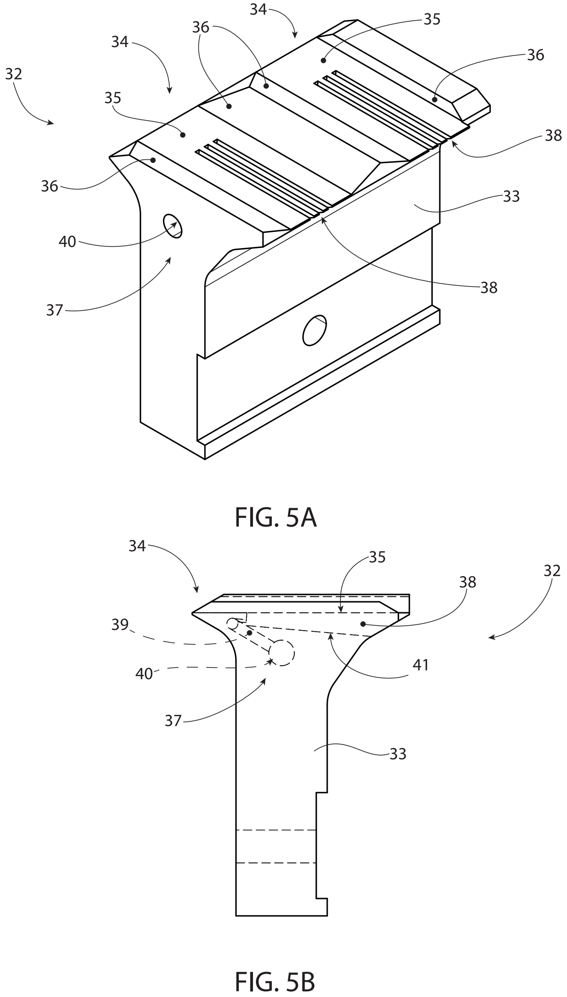

According to a second embodiment shown in figures 5A-5B, the openings 38 are defined by a number of slits 38, which extend in the longitudinal direction and are arranged substantially parallel to one another. In particular, there are a plurality of (for example, three) slits 38, which extend in the longitudinal direction and are arranged substantially parallel to one another. Advantageously, the slots 38 do not extend along the entire longitudinal dimension (length) of the accompanying plane 35. Preferably, the slits 38 extend from a point located at a distance (other than zero) from the end of the accompanying plane 35 facing the conveying device 18 to the end of the accompanying plane 35 facing the cutting device 17. The slits 38 are provided with a base surface 41 that is inclined with respect to the accompanying plane 35, in particular the base surface 41 is arranged so as to form, with the accompanying plane 35, an angle ranging from 5° to 45°.

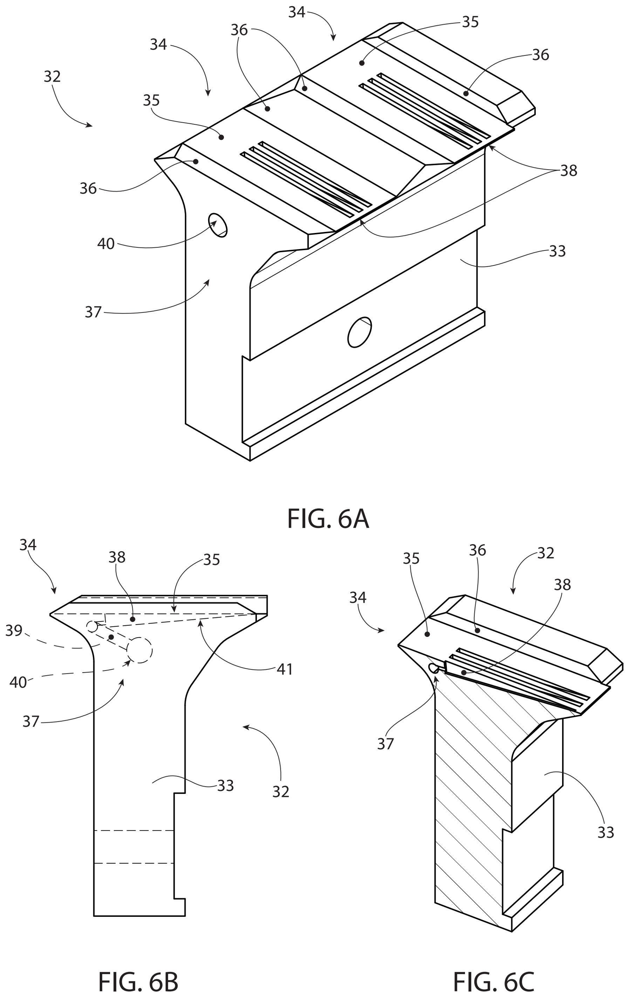

According to a third embodiment shown in figures 6A-6C, the openings 38 are defined by a number of slits 38, which extend in the longitudinal direction and are arranged substantially parallel to one another. In particular, there are a plurality of (for example, three) slits 38, which extend in the longitudinal direction and are arranged substantially parallel to one another. Advantageously, the slots 38 do not extend along the entire longitudinal dimension (length) of the accompanying plane 35. Preferably, the slits 38 extend from a point located at a distance (other than zero) from the end of the accompanying plane 35 facing the conveying device 18 to the end of the accompanying plane 35 facing the cutting device 17. The slits 38 are provided with a base surface 41 that is inclined with respect to the accompanying plane 35, in particular the base surface 41 is arranged so as to form, with the accompanying plane 35, an angle ranging from 135° to 175°.

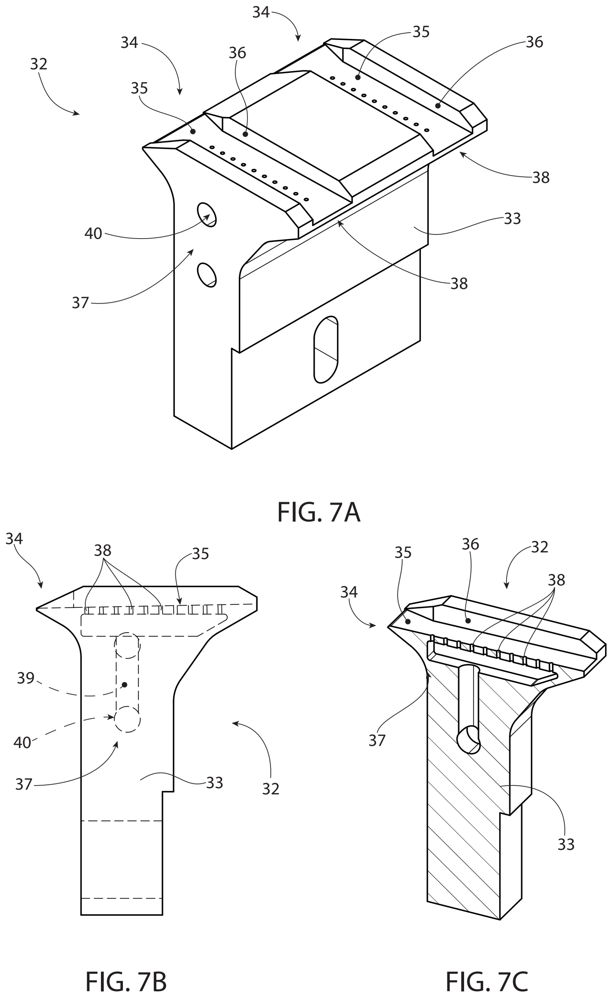

According to a fourth embodiment shown in figures 7A-7C, the openings 38 are defined by a number of holes 38 that are substantially aligned.

Advantageously, there are a plurality of holes 38, which are evenly distributed and partially extend along the longitudinal dimension (length) of the accompanying plane 35. The holes 38 extend from a point located at a distance (other than zero) from the end of the accompanying plane 35 facing the conveying device 18 to a point located at a distance (other than zero) from the end of the accompanying plane 35 facing the cutting device 17.

Alternatively, there are a plurality of holes 38, which are evenly distributed and extend along the entire longitudinal dimension (length) of the accompanying plane 35. The holes 38 extend from the end of the accompanying plane 35 facing the conveying device 18 to the end of the accompanying plane 35 facing the cutting device 17.

According to a further alternative, the holes 38 are not substantially aligned, but are evenly distributed over the entire accompanying plane 35.

### LIST OF THE REFERENCE NUMBERS OF THE FIGURES

- 1: pouch
- 2: quantity of loose product
- 3: wrapping sheet
- 4: longitudinal seal
- 5: transverse seals
- 6: packer machine
- 7: packer unit
- 8: tubular wrap
- 10: feeding device
- 11: wrapping material band
- 12: supplying device
- 13: forming station
- 14: wrapping device
- 15: longitudinal sealing unit
- 16: transverse sealing unit
- 17: cutting device
- 18: conveying device
- 18a: first end of the conveying device
- 18b: second end of the conveying device
- 19: belts
- 20: tubular spindle element
- 22: supplying drum
- 23: hopper
- 24: input channel
- 25: pulleys
- 26: actuator device
- 27: teeth or claws
- 28: roller
- 29: cutting device
- 30: countering device
- 31: upper surface
- 32: accompanying element
- 33: main body
- 34: seat
- 35: base surface/accompanying plane
- 36: lateral panels
- 37: pneumatic transport device
- 38: openings
- 39: input channel
- 40: opening
- 41: base surface
- P: feeding path
- Q: manufacturing path
- SC: control system
- UC: control unit
- S: conveying path
- Z: transverse sealing zone
- L: length of each pouch
- L1: length

## Claims

1. A packer machine (6) for the production of pouches (1), wherein each pouch (1) encloses, on the inside, a respective quantity (2) of a loose material and is closed by two transverse seals (5) opposite one another, the machine (6) comprises at least one packer unit (7) configured to produce the pouches (1), which comprises, in turn:
- a forming station (13), which is located along a manufacturing path (Q) for the pouches (1) and is configured to form a continuous succession of pouches (1) connected to one another in the area of transverse sealing zones (Z);
- a cutting device (17), which is located downstream of the forming station (13) along the manufacturing path (Q) and is configured to transversely cut the continuous succession of pouches (1) in the area of the transverse sealing zones (Z) so as to separate the single pouches (1);
- a conveying device (18), which is located along the manufacturing path (Q) between the forming station (13) and the cutting device (17) and is configured to convey the continuous succession of pouches (1) coming from the forming station (13) towards the cutting device (17); and
- an accompanying element (32), which is located along the manufacturing path (Q) between the conveying device (18) and the cutting device (17) and comprises a main body (33) and at least one seat (34), which is obtained in the main body (33) and is preferably open at the top; wherein said at least one seat (34) is configured to define a plane (35) for accompanying the continuous succession of pouches (1) exiting the conveying device (18) towards the cutting device (17).

2. The packer machine (6) according to claim 1, wherein the accompanying element (32) comprises a pneumatic transport device (37) configured to create an air cushion interposed between the continuous succession of pouches (1) and the accompanying plane (35), which is configured to facilitate the movement of the continuous succession of pouches (1) towards the cutting device (17).

3. The packer machine (6) according to claim 2, wherein the pneumatic transport device (37) comprises a number of first openings (38) obtained in the accompanying plane (35) configured to direct the air flow towards the continuous succession of pouches (1); wherein the first openings (38) are in fluid communication with a channel (39) obtained in the main body (33) and configured for the connection to an air supply circuit by means of at least one second opening (40).

4. The packer machine (6) according to claim 3, wherein the first openings (38) comprise a number of slits (38), which extend in the longitudinal direction and are arranged substantially parallel to one another.

5. The packer machine (6) according to claim 4, wherein the first openings (38) are provided with a base surface (41) arranged parallel to the accompanying plane (35).

6. The packer machine (6) according to claim 4, wherein the first openings (38) are provided with a base surface (41) arranged so as to form, with the accompanying plane (35), an angle ranging from 5° to 45°.

7. The packer machine (6) according to claim 4, wherein the first openings (38) are provided with a base surface (41) arranged so as to form, with the accompanying plane (35), an angle ranging from 135° to 175°.

8. The packer machine (6) according to any one of the claims from 4 to 7, wherein the first openings (38) extend from a point located at a distance other than zero from the end of the accompanying plane (35) facing the conveying device (18) substantially to the end of the accompanying plane (35) facing the cutting device (17).

9. The packer machine (6) according to claim 3, wherein the first openings (38) comprise a number of holes (38) that are substantially aligned in at least one line along the longitudinal dimension of the accompanying plane (35).

10. The packer machine (6) according to any one of the preceding claims, wherein the accompanying plane (35) has dimensions that are substantially the same as those of a pouch (1).

11. The packer machine (6) according to any one of the preceding claims, wherein said at least one seat (34) is provided with two lateral panels (36) configured to laterally guide/direct the continuous succession of pouches (1) towards the cutting device (17); wherein the lateral panels (36) are transverse relative to the accompanying plane (35).

12. The packer machine (6) according to any one of the preceding claims, wherein the conveying device (18) comprises a pair of belts (19) looped around respective pulleys (25) and on top of one another.

13. The packer machine (6) according to any one of the preceding claims, wherein said at least one packer unit (7) operates on a multiple line to manufacture a plurality of continuous successions of pouches (1) at a time and comprises one single accompanying element (32) having one single main body (33) and a plurality of seats (34) obtained in the main body (33) and arranged side by side.

14. The packer machine (6) according to any one of the claims from 1 to 12, wherein said at least one packer unit (7) operates on a multiple line to manufacture a plurality of continuous successions of pouches (1) at a time and comprises an accompanying element (32) for each line, each having, in turn, a respective main body (33), in which one single seat (34) is obtained.
